# EUROPEAN PATENT SPECIFICATION

(11) **EP 1 253 797 B1**
(45) Date of publication and mention of the grant of the patent: **15.06.2005**
(21) Application number: 02007495.1
(22) Date of filing: 02.04.2002
(51) Int. Cl.: H04Q 7/38

(54) **Communication system, communication unit and method for dynamically changing an encryption key**
Kommunikationssystem, Kommunikationseinheit und Verfahren zur dynamische Änderung des Kryptoschlüssels
Système de communication, unité de communication et procédé pour changement dynamique de clé d'encryptage

(30) Priority: 23.04.2001 GB 0109909
(43) Date of publication of application: 30.10.2002
(73) Proprietor: MOTOROLA, INC., Schaumburg, IL 60196 (US)
(72) Inventor: Johur, Jason, Marlow, Bucks SL7 1TH (GB); Carmon, Rafy, Holon 58679 (IL)
(74) Representative: Treleven, Colin

(56) References cited:
- WO-A-99/41877
- US-A- 5 404 404
- US-A- 5 412 722
- US-A- 5 619 572
- "Terrestrial Trunked Radio (TETRA); Voice plus Data (V+D); Part 7: Security; 3 Definitions, symbols and abbreviations; 4.2 Air Interface key management mechanisms; 4.5 OTAR Protocols; A.2 OTAR PDUs" ETSI EN 300 392-7 V2.1.1, [Online] 16 February 2001 (2001-02-16), XP002224025 Retrieved from the Internet: <URL:www.etsi.org> [retrieved on 2002-12-06]

## Description

### Field of the Invention

This invention relates to digital mobile radio communication systems employing air interface encryption and, in particular, encryption with individual and/or shared cipher keys.

### Background of the Invention

Wireless communications systems, for example cellular telephony or private mobile radio communications systems, typically provide for radio telecommunication links to be arranged between a plurality of base transceiver stations (BTSs) and a plurality of subscriber units, often termed mobile stations (MSs). The term mobile station generally includes both hand-portable and vehicular mounted radio units.

Wireless communications systems are distinguished over fixed communications systems, such as the public switched telephone networks (PSTN), principally in that mobile stations move between service providers (and/or different BTS) and in doing so encounter varying radio propagation environments.

In a wireless communications system, each BTS has associated with it a particular geographical coverage area (or cell). The coverage area defines a particular range that the BTS can maintain acceptable communications with MSs operating in its serving cell. Often these cells combine to produce an expanded system coverage area. Furthermore, cells are often grouped into location areas for the purposes of tracking a MS within the coverage area whilst minimising location-updating signalling.

The communication link from a BTS to a MS is generally referred to as a down-link channel. Conversely, the communication link from a MS to a BTS is generally referred to as an up-link channel.

Multiple access techniques permit simultaneous transmissions from several MS to a single BTS over a plurality of communications channels. Some channels are used for carrying traffic whilst other channels (which may be logical or dedicated channels) are used for transferring control information, such as call paging, between the base transceiver stations and subscriber units. Examples of multiple access techniques include: frequency division multiple access (FDMA), time division multiplexing/multiple access (TDM, TDMA) and code division multiple access (CDMA).

In the field of this invention it is known that systems such as the digital private/public mobile radio system - TErrestrial Trunked RAdio (TETRA) - employ air interface (AI) encryption technology using, what is generally termed in the art, cipher keys. A cipher key is generally defined as information, typically a sequence of random or pseudorandom binary digits, used initially to set up and periodically change the operations performed in crypto-equipment. Such keys are used to encrypt or decrypt electronic signals, or to determine electronic counter-countermeasures patterns, for example frequency hopping or spread spectrum, or for producing other keys. In the art, the term "key" is often used to encompass the terms "variable key", "key(ing) variable" and "cryptovariable."

The TETRA system also supports various protocol messages for the exchange and activation of AI encryption between a Switching and Management Infrastructure (SwMI) and the mobile stations (MSs).

Systems such as TETRA are designed mainly for the public safety market and as such represent mission critical communications. One of the main features of these systems is the AI security, which comprises AI encryption and authentication. AI encryption requires the use of individual and/or shared AI cipher keys, which require frequent re-keying. It is unacceptable to the operator and end-users of these systems to have calls pre-empted, interrupted or even call-barred due to imminent changes in AI cipher key.

A difficulty for manufacturers of SwMIs that support AI encryption is that MS manufacturers may not support all the protocol messages described in the protocol standard. The use of interoperability and terminal-compatibility agreements between manufacturers goes some way to reconcile these issues. However, it may be a competitive advantage for a SwMI manufacturer to offer more features than those required for interoperability purposes.

It is also noteworthy that key changes are sometimes required to be actioned immediately following a compromise or network failure of some kind. Thus, the SwMI should have a mechanism of changing AI cipher key both quickly and efficiently with minimal disruption to the end-user(s). AI cipher keys may, in practice, also be required to change in a system due to the crypto-period expiring or after a successful authentication exchange.

The inventors of the present invention have recognised that in order to prevent either call restrictions happening, or facilitate the immediate need for an AI cipher key change, such changes should occur transparently to the MS user(s). Furthermore, such changes should be provided when an affected MS is not only outside an on-going call, but also, whenever possible, when the MS is communicating.

However, existing digital radio communication systems employing AI encryption do not provide for a change of cipher key during a call. In current systems cipher keys can only be changed during call set-up and call handover.

It is noteworthy that practical mobile radio communication systems are known to suffer from radio link errors. These errors may prevent MS(s) from receiving important signalling commands or messages from the SwMI. This has particular relevance to AI encryption since a MS that had not received a key change or encryption state change command within a call will continue to decode speech/data (or user-plane) using the wrong AI cipher key.

More importantly, these types of communication systems do not make use of AI cipher keys that are shared by a group or groups of users. Systems utilising technology such as TETRA require many MS to be frequently re-keyed and capable of switching keys 'on-the-fly' with minimal interruption to service.

Systems similar to TETRA have limited signalling bandwidth on circuit mode speech or data frames. As a result of this limitation, these systems are unable to broadcast any key version identifiers on these frames without causing deterioration in service, for example adversely affecting audio quality.

In TETRA systems, the SwMI does have an opportunity to signal the key version identifiers in use on a slow associated control channel (SACCH) associated with the call. However the opportunity only appears in mandatory transmission periods, no more than once every four seconds. Even if such transmissions were made more frequently, for example on a SACCH of other systems, the transmissions would use up the limited control signalling bandwidth that may be required for transmission control signalling.

TETRA supports authentication of both SwMI and MS. One of the outputs of this process is an AI cipher key that is derived (DCK) and which may be used in AI encryption. The inventors of the present invention have identified a problem associated with synchronization of this key between a SwMI and MS. The SwMI does not broadcast an indication of the version of the DCK in use between them. If authentication were to occur during a call, and if the transmission were to be partially corrupted, the MS and SwMI will end-up using different DCKs. One party may think that the authentication was successful, whilst the other would not.

Such an approach would support signalling to indicate a key change to the MS, however this will be sent unacknowledged in most systems, since the message would typically need to be conveyed to a large number of MS in the call in a short period of time. The alternative would require use of acknowledged signalling to every MS in the call, i.e. the SwMI would have to be made aware of the identities of all MS in the call, which is not always possible.

Furthermore, in this instance, the call would typically be over before the SwMI had opportunity to signal the key change to most MS. As a consequence of the above, current systems employ unacknowledged signalling that is scheduled and broadcast by the SwMI.

There is known in the prior art a method of updating encryption key information in communication units as disclosed in US5404404 where a key management terminal transmits a key update message to a communication resource allocator. Upon receipt of the key update message, the communication resource allocator determines a rekey session number from the key update message and allocates a communication resource for the particular communication group. Operation as in the present invention is not disclosed nor suggested in this prior art.

In another prior art document, US US5412722, a method of encryption key management is described, but operation as in the present invention is not disclosed nor suggested in this document.

In yet another prior art document, ETSI EN 300 392-7, chapter 4.5.5 discloses requirements for notification of an encryption key change over the air but does not disclose nor suggest solution as in the present invention.

In summary, it cannot be guaranteed that every MS had received notification of an imminent or immediate air interface cipher key change. Therefore it does not prevent the MS incorrectly decoding circuit mode speech (corrupted/garbled audio) or circuit mode data frames with the wrong AI cipher key when it had missed the indication of cipher key change. Furthermore, following a key change, prior art techniques do not prevent a flood of re-key requests in a call which inevitably waste valuable control signalling opportunities on SACCH which are required for transmission control.

Thus there exists a need to provide a communication system, communication unit and method for dynamically changing a cipher key wherein the abovementioned disadvantages may be alleviated.

### Statement of Invention

In accordance with the present invention there is provided a method for dynamically changing a cipher key, as claimed in claim 1.

In accordance with a second aspect of the present invention there is provided a communication system that facilitates dynamic changing of a cipher key, as claimed in claim 6.

In accordance with a third aspect of the present invention there is provided a communication unit adapted to handle dynamic changing of a cipher key in the communication system, as claimed in claim 7.

In accordance with a fourth aspect of the present invention there is provided a storage medium operative to store processor-implementable instructions for controlling a processor, as claimed in claim 8.

### Brief Description of the Drawings

Exemplary embodiments of the present invention will now be described, with reference to the accompanying drawings, in which:
FIG. 1 shows a block diagram of a trunked radio communications system that can be adapted to support the various inventive concepts of a preferred embodiment of the present invention.
FIG. 2 shows a block diagram of a trunked radio communications unit that can be adapted to support the various inventive concepts of a preferred embodiment of the present invention.
FIG. 3 shows a process flow diagram for changing an encryption key in accordance with a preferred embodiment of the present invention.

### Description of Preferred Embodiments

In summary, the inventive concepts of the present invention, a marker field, previously only used to indicate call sessions is also used when applying an encryption mode or key change. Further, such a marker field is transmitted on the traffic channel, thereby informing communications units of the encryption mode or key change substantially earlier than prior art arrangements. Such a technique forces a MS off the channel immediately, if the MS is unable to decode the control protocol data unit (PDU).

The inventive concepts described herein alleviate at least some of the problems associated with prior art arrangements, as follows:
(i) They can prevent an MS incorrectly decoding speech/data frames with the wrong AI cipher key when it had missed the indication of encryption mode or cipher key change;
(ii) They can allow a SwMI to support an on-the-fly AI cipher key or encryption mode state change during a call whilst maintaining backwards compatibility with existing MS that may not support this functionality;
(iii) They can prevent a flood of re-key requests during a call by MS which do not possess the new AI cipher key. Such a flood uses up valuable control signalling opportunities on a traffic channel (TCH) preventing other MS, participating in the call, from signalling more important call related or call unrelated information to the SwMI.

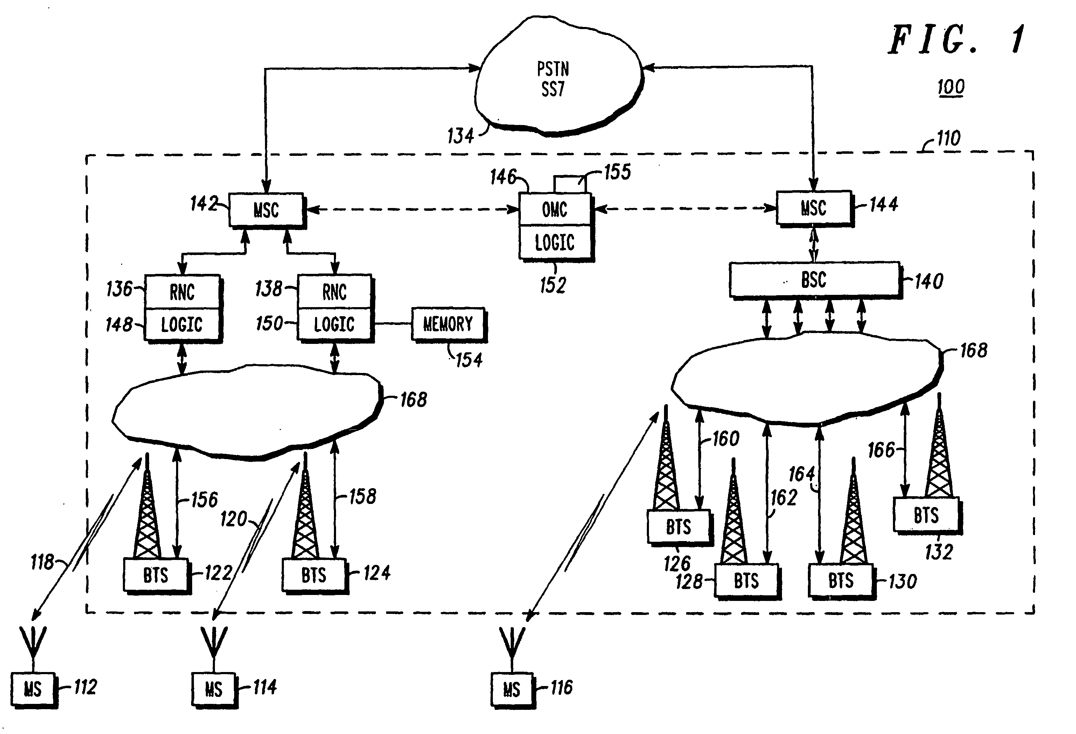

Referring first to FIG. 1, a trunked radio communications system 100, supporting a TErrestrial Trunked RAdio (TETRA) air-interface, is shown in outline, in accordance with a preferred embodiment of the invention. The TETRA air-interface has been defined by the European Telecommunications Standards Institute (ETSI). Generally, the air-interface protocol is administered from base transceiver sites that are geographically spaced apart - one base site supporting a cell (or, for example, sectors of a cell).

A plurality of subscriber units, such as a mixture of MSs 112-116 and fixed terminals (not shown), communicate over the selected air-interface 118-120 with a plurality of base transceiver stations (BTS) 122-132. A limited number of MSs 112-116 and BTSs 122-132 are shown for clarity purposes only.

The system infrastructure in a TETRA system is generally referred to as a switching and management infrastructure (SwMI) 110, which substantially contains all of the system elements apart from the mobile units. The BTSs 122-132 may be connected to a conventional public-switched telephone network (PSTN) 134 through base station controllers (BSCs) 136-140 and mobile switching centres (MSCs) 142-144.

Each BTS 122-132 is principally designed to serve its primary cell, with each BTS 122-132 containing one or more transceivers. The BTSs 122-132 communicate 156-166 with the rest of the trunking system infrastructure via a frame relay interface 168.

Each BSC 136-140 may control one or more BTSs 122-132, with BSCs 136-140 generally interconnected through MSCs 142-144. Each BSC 136-140 is therefore able to communicate with one another, if desired, to pass system administration information therebetween, with BSCs 136-140 responsible for establishing and maintaining control channel and traffic channels to serviceable MSs 112-116 affiliated therewith. The interconnection of BSCs 136-140 therefore allows the trunked radio communication system to support handover of the MSs 112-116 between cells.

Each MSC 142-144 provides a gateway to the PSTN 134, with MSCs 142-144 interconnected through an operations and management centre (OMC) 146 that administers general control of the trunked radio system 100, as will be understood by those skilled in the art. The various system elements, such as BSCs 136-138 and OMC 146, will include control logic 148-152, with the various system elements usually having associated memory 154 (shown only in relation to BSC 138 for the sake of clarity). The memory typically stores historically compiled operational data as well as in-call data, system information and control algorithms.

In addition to administering general control of the trunked radio system 100, in accordance with the preferred embodiment of the invention, the OMC 146 contains a key management facility 155. The key management facility (KMF) 155 controls the encryption processes used in the system - particularly important in the field of private mobile radio systems that provide communication to the Public service organisations such as the Police, Ambulance, Fire brigade. The TETRA Medium Access Control (MAC) protocol, administered by the BTS in the SwMI, uses the concept of a temporary usage marker (UM) to identify a traffic channel (TCH) on a carrier and timeslot. These UM are indicated in the downlink slots of a TCH.

In accordance with the preferred embodiment of the present invention, when the MS is allocated a TCH for a call, the SwMI 110 assigns a UM to the TCH and signals this to MSs 112, 114, 116. When a MS, for example MS 112, arrives on the TCH, it expects to see the UM broadcast on the TCH within a broadcast Access Assignment Channel (AACH). If MS 112 fails to see this UM for a predefined number (X) of TDMA frames, MS 112 will assume that the TCH has been allocated to a different call and will, therefore, leave the TCH and return to the main control channel (MCCH) associated with its serving cell.

In addition to the above, a MAC protocol also identifies the partial version number of any shared AI cipher keys used to encrypt control protocol data units (PDUs). MS 112 may monitor this partial version number to detect when an AI encryption cipher key has been changed by key management facility 155. In addition, the SwMI 110 periodically broadcasts the complete set of key identifiers associated with the in-use shared cipher keys using mandatory broadcast signalling in a slow associated control channel (SACCH). However, these are transmitted much less frequently (typically once every four seconds).

In the context of the present invention, the key management facility 155, in the SwMI 110, has been adapted to determine when a key change (or encryption state change) is required. The key management facility 155, instructs the BTS in the SwMI to generate a control PDU containing an indication of an AI cipher key (or encryption state change). Furthermore, the BTS has been adapted to ensure that a channel is allocated for the transmission of the new control PDU on the same TCH on the same carrier and timeslot(s) but with a different UM to that currently being used. The SwMI synchronises the transmission of this control PDU with the change of UM broadcast on the AACH associated with the TCH.

It is within the contemplation of the invention that the key management facility 155 may be incorporated into a MSC, BSC or BTS, or distributed between a number of such higher elements in the system architecture, and need not be located in the OMC 146.

More generally, the encryption key programming according to the preferred embodiment of the present invention may be implemented in a respective communication unit in any suitable manner. For example, new apparatus may be added to a conventional communication unit (for example OMC 146), or alternatively existing parts of a conventional communication unit may be adapted, for example by reprogramming one or more processors therein. As such the required adaptation may be implemented in the form of processor-implementable instructions stored on a storage medium, such as a floppy disk, hard disk, PROM, RAM or any combination of these or other storage multimedia.

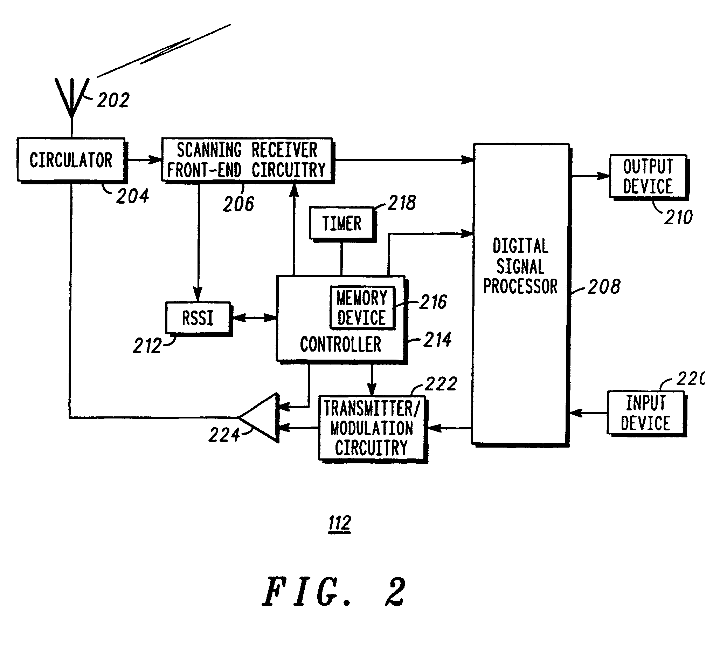

Referring now to FIG. 2, a block diagram of a subscriber unit/mobile station (MS) 112 adapted to support the inventive concepts of the preferred embodiments of the present invention is shown.

The MS 112 contains an antenna 202 preferably coupled to a duplex filter or circulator 204 that provides isolation between receive and transmit chains within MS 112.

The receiver chain includes scanning receiver front-end circuitry 206 (effectively providing reception, filtering and intermediate or base-band frequency conversion). The scanning front-end circuit 206 scans signal transmissions from its associated BTS and any DMO call set-up messages from other MS in its talk group. The scanning front-end circuit 206 is serially coupled to a signal processing function (processor, generally realised by a DSP) 208.

In accordance with a preferred embodiment of the invention, the signal processing function 208 has been adapted for a receiving MS to receive and process a control PDU sent by the SwMI, indicating a change of cipher key. When the communication unit 112 is allocated a TCH for a call the signal processing function 208 determines, from the transmitted control PDU, the UM assigned to the TCH.

If communication unit 112 fails to see this UM for a predefined number (X) of TDMA frames, communication unit 112 assumes that the TCH has been allocated to a different call and, therefore, leaves the TCH and returns to the main control channel (MCCH) associated with its serving cell.

In addition, the signal processing function 208 has also been adapted to monitor any partial version number to detect when an AI encryption cipher key has been changed by key management facility 155, as well as receive any transmission of the complete set of key identifiers associated with the in-use shared cipher keys.

A controller 214 is operably coupled to the scanning front-end circuitry 206 so that the receiver can calculate receive bit-error-rate (BER) or frame-error-rate (FER) or similar link-quality measurement data from recovered information via a received signal strength indication (RSSI) 212 function. The RSSI 212 function is operably coupled to the scanning front-end circuit 206. The memory device 216 stores a wide array of MS-specific data, such as decoding/encoding functions and the like, as well as link quality measurement information to enable an optimal communication link to be selected, and determine whether any reception of a change in cipher key message may be prone to errors.

A timer 218 is operably coupled to the controller 214 to control the timing of operations, namely the transmission or reception of time-dependent signals, within the MS 112. As known in the art, received signals that are processed by the signal processing function are typically input to an output device 210, such as a speaker or visual display unit (VDU).

In the context of the preferred embodiment of the present invention, timer 218 is used to synchronize the receiving MS 112 to the timing dictated by the SwMI 110, in particular to communicate the appropriate cipher key requests on the SACCH.

In accordance with the preferred embodiment of the invention, the MS will be forced to leave a call if the MS does not possess the new cipher key. By forcing the MS off the TCH, the MS will now immediately return to the MCCH before requesting the new cipher key. It will be re-keyed quickly before returning to the MCCH using late entry.

In any system that does not employ the inventive concepts described herein, the MS would remain in the call flooding the SACCH with re-key requests. The MS would have to mute its audio circuitry until it had received the re-key request, which could be after an undesirable period of time due to possible lack of capacity available in SACCH.

As regards the transmit chain, this essentially includes an input device 220, such as a microphone, coupled in series through a processor 208, transmitter/modulation circuitry 222 and a power amplifier 224. The processor 208, transmitter/modulation circuitry 222 and the power amplifier 224 are operationally responsive to the controller, with an output from the power amplifier coupled to the duplex filter or circulator 204, as known in the art.

The transmit chain in MS 112 has been adapted to request over-the-air re-programming (OTAR) of the cipher key when it determines that it has an incorrect cipher key. The OTAR process includes the MS 112 requesting the key from the BTS. If the BTS has the key, it will provide it, otherwise it may go to the MSC or KMF 155 - depending on implementation and key type. Long lifetime keys are preferably stored in the KMF 155 whereas short lifetime keys are temporarily stored in the MSC and BTS for ease of access.

The signal processor function 208 in the transmit chain may be implemented as distinct from the processor in the receive chain. Alternatively, a single processor 208 may be used to implement processing of both transmit and receive signals, as shown in FIG. 2.

Of course, the various components within the MS 112 can be realised in discrete or integrated component form, with an ultimate structure therefore being merely an arbitrary selection.

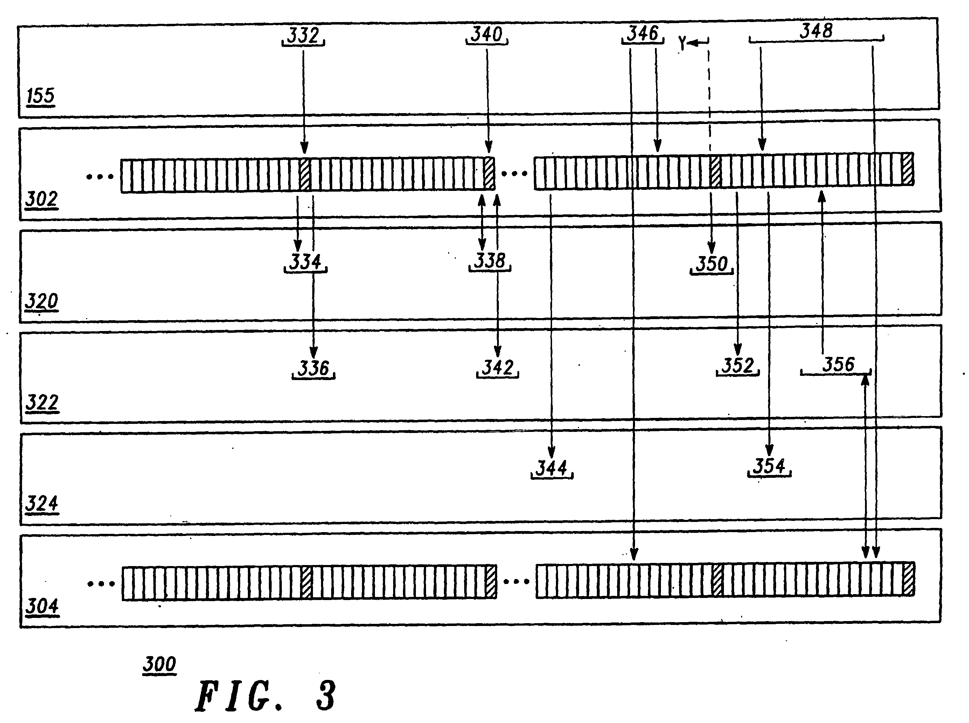

Referring now to FIG. 3, the preferred embodiment of this invention will also be described by way of an example data flow diagram 300 involving key changes of shared keys during a circuit mode speech call. This example includes possible outcomes of three different MS - MS-1 320, MS-2 322, MS-3 324 with different pre-conditions.

First, let us assume that MS-1 320 represents an MS that was communicating in a call and had received notification of a future key change initiated by the SwMI Key Management facility 155 and signalled by the BTS. MS-1 320 was able to request OTAR of the key from the SwMI Key Management facility 155 prior to the change. MS-1 320 also received the final key-change notification that included a channel allocation to the current channel containing a new UM for the same call session. MS-1 320 was able to remain in the call without any disruption to service.

Secondly, let us assume that MS-2 322 represents an MS that was communicating in the call and had received notification of a future key change initiated by the Key Management facility 155 and signalled by the BTS. MS-2 322 was unable to request OTAR of the key from the Key Management facility 155 prior to the change. MS-2 322 also received the final key change notification that included a channel allocation to the current channel containing a new UM for the same call session. MS-2 322 was able to determine that there had been a key change but was unable to decrypt the channel allocation in the message, since it was encrypted with the new key. MS-2 322 returns to the MCCH 304 (where control signalling opportunities are much greater) to request OTAR of the new key. Once MS-2 322 has received OTAR of the new key, it may decode late entry signalling and return to the TCH 302 to recommence the call.

Thirdly, let us assume that MS-3 324 represents an MS that joined the call late and just prior to the last key change notification message initiated by the Key Management facility 155 and signalled by the BTS. MS-3 324 did not receive the key change notification due to radio link errors or whilst changing carrier. MS-3 324 detects a change in UM conveyed in the AACH for the TCH 302 that does not correspond to the value assigned to it, using the channel allocation sent on the MCCH 304 directing MS-3 324 to the TCH 302. MS-3 324 was able to determine that there had been a key change but was unable to decrypt the channel allocation in the message, since it was encrypted with the new key. MS-3 324 returns to the MCCH 304 (where control signalling opportunities are much greater) to request OTAR of the new key. Once MS-3 324 has received OTAR of the new key, it may decode late entry signalling and return to the TCH 302 to recommence the call.

FIG. 3 illustrates a series of events that would occur to the above three MS, when employing the dynamic cipher key changing mechanism according to the preferred embodiment of the invention. The SwMI key management facility 155 determines that a key change is required and when it will occur, i.e. on a specific frame and slot TDMA boundary.

The SwMI key management facility 155 transmits control signalling that contains a notification of the key change on a particular frame and slot TDMA boundary using SACCH, as shown in step 332.

MS-1 320 receives, in step 334, control signalling from the SwMI key management facility 155 that contains the notification of the key change on a particular frame and slot TDMA boundary. MS-1 320 determines that it does not possess the key identified in the key change notification message and decides to request OTAR in the SACCH.

MS-1 320 requests, in step 338, OTAR of the key indicated in the key change message initiated by the SwMI key management facility 155 and transmitted by the BTS. On receipt from the BTS of the key in step 340, MS-1 320 decrypts it in preparation for the key change.

MS-2 322 also receives, in step 336, control signalling from the BTS that contains the notification of the key change on a particular frame and slot TDMA boundary, as shown in step 336. MS-2 322 also determines that it does not possess the key, identified in the key change notification message, and decides to request OTAR in SACCH, as shown in step 342.

The SwMI processes the OTAR request of the MS(s), in step 340, wherever possible given the scheduling priorities of all signalling sent during the call and depending on availability of a sealing key for the MS-2 322 in the SwMI. In this particular case, the SwMI was unable to provide the OTAR message that, for example, may have been due to a network failure/outage, poor coverage or no available signalling bandwidth.

As mentioned, MS-3 324 joins the circuit mode call using late entry signalling on the MCCH 304, as shown in step 344. MS-3 324 starts to receive traffic data together with an indication of the current UM. The BTS determines that the key change is Y TDMA frames away, as shown.

In accordance with the preferred embodiment of the invention, the BTS will then allocate a new UM for the existing call session to accompany the key change message.

Notably, the BTS starts broadcasting the new UM on the AACH. The SwMI also disables late entry signalling on the MCCH 304 to prevent further MS joining the call.

The SwMI key management facility 155 determines that the key change is now required, as in step 346. The BTS generates a control PDU that contains an indication of the new AI cipher key and the channel allocation with the new UM for the existing call session. The BTS also re-enables late entry signalling on the MCCH 304.

MS-1 320 receives signalling initiated by the SwMI key management facility 155 and signalled by the BTS that contains notification of the key change, as shown in step 348. MS-1 320 determines that it possesses the key, decodes the channel allocation in the control PDU and assigns the new UM to that particular TCH 302. As MS-1 320 is in possession of the new key, it will not request OTAR and remains on the TCH 302.

Similarly, MS-2 322 also receives signalling from the SwMI containing notification of the key change, as shown in step 350, but is unable to decode it since it does not possess the new cipher key. In addition, MS-2 322 receives X TDMA frames with a UM that does not correspond to that originally assigned to the TCH. If after receiving X TDMA frames, MS-2 322 determines that it the UM does not correspond with the one assigned to the current TCH, it leaves the TCH 304 and returns to the MCCH 306. By returning to the MCCH 306, MS-2 322 detects the key change and may request OTAR, as shown in step 354. Such a request precedes any processing of late entry signalling which would immediately send it back to the TCH 304.

In contrast, MS-3 324 misses the signalling from the SwMI containing notification of the key change and channel allocation, as indicated in step 352. Similarly, MS-3 324 determines that it has received X many TDMA frames with a UM that does not correspond with the one it has assigned to the current TCH 304. MS-3 324 then leaves the TCH 304 and returns to the MCCH 306. Here, the MS detects the key change and may request OTAR, as shown in step 356, before processing late entry signalling.

In such a manner, dynamic changing of an AI cipher key can be effected, irrespective of whether a call is in place, being set-up or a MS is in a handover process.

The authentication process, when operating on a system with AI encryption, typically generates a cipher key used for encrypting individually addressed signalling and traffic to and from an MS.

It is within the contemplation of the invention that the inventive concepts described herein apply equally to the case where a MS were to be authenticated on a traffic channel. In such a case, the SwMI shall include a channel allocation containing a new usage marker with the PDU that indicates the authentication result to the MS. If the MS does not receive the notification of the authentication result, the MS will leave the call and return to the MCCH. Hence, the inventive concepts of the present invention have been applied to a different scenario where version key identifiers are not indicated over the air interface. This ensures a key change is synchronised between MS and BS on a TCH.

In this example, the SwMI determined a "re-key window" of approximately 40 multi-frames on the TCH that would allow a MS to request OTAR of the new key prior to the key change. This was an arbitrary value, however in a preferred embodiment this value may be dynamically adjustable. The longer the window, the more opportunity there is for a MS in a call to request OTAR of the future AI cipher key. Therefore more MSs remain in the call without the need to return to the MCCH. However, having a wide "re-key window" allows MSs without the future AI cipher key to disrupt transmission control signalling in the call. The SwMI designer needs to tailor the aperture of this window to suit the requirements of the system.

Furthermore, this value could also be determined using the type calls active at the site, for example emergency, group, individual calls, and the number of registered MS and their affiliated groups. For example, if a key change were required during a group call, the BTS could calculate the "re-key window" based on the time taken for the estimated number of MS affiliated to this group at the site to request and receive a re-key from the SwMI.

In summary, a method for dynamically changing an encryption key in a wireless communication system employing encryption protocol has been provided. The communication system includes a serving communication unit communicating with a plurality of remote communication units. The method includes the steps of communicating a message, from the serving communication unit to the plurality of remote communication units. The message includes an indication of a communication resource for the plurality of communication units to use. The plurality of remote communication units are notified of a change in an encryption key or encryption mode, within said message.

In addition, a communication system adapted to facilitate dynamic changing of an encryption key has been provided.

Furthermore, a communication unit adapted to handle a dynamically changed encryption key has also been provided.

A storage medium storing processor-implementable instructions for controlling a processor to carry out the method steps has also been provided.

It will be understood that the communication system, communication unit and method for dynamically changing a cipher key described above provides at least the following advantages:
(i) eliminates conditions of corrupted circuit mode speech or data as a result of a key change during a call, thereby minimising loss of service and disruption to the end-user(s);
(ii) backwards compatibility with MS that do not support key changes during a call;
(iii) existing unacknowledged signalling in the TETRA standard to become reliable in the event that an MS missed the transmission(s) due to radio link errors or other reasons;
(iv) provides a reliable mechanism to change the AI cipher key or encryption mode of a communications channel that is assigned for use in circuit mode speech or data; and
(v) provides the means to prevent a flood of re-key requests during a call by MS which do not possess the new AI cipher key. This minimises unnecessary use of valuable control signalling opportunities (SACCH) on a traffic channel, which would prevent other MS, participating in a call, from signalling more important transmission control signalling to the SwMI.

Thus a method and communication system for changing an encryption key have been provided, that aim to alleviate at least some of the aforementioned problems associated with prior art arrangements.

## Claims

1. A method for dynamically changing an encryption key in a wireless communication system (100) employing encryption protocol, the communication system (100) including a serving communication unit (122-132) communicating with a plurality of remote communication units (112-116), the method comprising the steps of:
communicating a message, from the serving communication unit to the plurality of remote communication units (112-116, 320-324) wherein the message includes an indication of a traffic channel with an assigned usage marker for the plurality of remote communication units to use;
the method **characterised by** the step of:
notifying (332) the plurality of remote communication units (112-116, 320-324) of a change in an encryption key or encryption mode, within said message, wherein said communication units are notified on said traffic channel (302);
said step of notifying includes the step of:
assigning a new usage marker to the same traffic channel for the call; and
leaving the traffic channel by the communication unit and returning to a main control channel if said communication unit missed said notification and determines that the new usage marker does not correspond with the one the communication unit has assigned to the traffic channel.

2. The method for dynamically changing an encryption key according to claim 1, the method further **characterised in that** the step of notifying a change in encryption key is made during a call.

3. The method for dynamically changing an encryption key according to any preceding claim, the method further **characterised in that** the encryption key is a shared key used between the plurality of remote communication units or an individual key assigned to individual remote communication units.

4. The method for dynamically changing an encryption key according to any preceding claim, the method further **characterised by** the step of:
transmitting the message in every circuit mode speech or data frame within the communication system.

5. The method for dynamically changing an encryption key according to any preceding claim, the method further **characterised by** the steps of:
processing the message, by a remote communication unit to determine a change of the encryption key or encryption mode; and
assigning the new usage marker said traffic channel, by the remote communication unit when a change of the encryption key or encryption mode is determined.

6. A communication system (100) adapted to facilitate any of the aforementioned steps to dynamically change an encryption key.

7. A communication unit (112) adapted to handle a dynamically changed encryption key in accordance with any of method claims 1 to 5.

8. A storage medium (208) operative to store processor-implementable instructions for controlling a processor to carry out the method of any of claims 1 to 5.

## Patentansprüche

1. Verfahren zum dynamischen Verändern eines Verschlüsselungsschlüssels in einem System (100) zur drahtlosen Kommunikation, das ein Verschlüsselungsprotokoll einsetzt, wobei das Kommunikationssystem (100) eine bedienende Kommunikationseinheit (122-132) umfasst, die mit einer Mehrzahl von entfernten Kommunikationseinheiten (112-116) kommuniziert, wobei das Verfahren die Schritte umfasst:
Kommunizieren einer Nachricht von der bedienenden Kommunikationseinheit an die Mehrzahl von entfernten Kommunikationseinheiten (112-116, 320-324), wobei die Nachricht eine Angabe eines Verkehrskanals mit einer zugewiesenen Verwendungskennzeichnung zur Verwendung durch die Mehrzahl von entfernten Kommunikationseinheiten umfasst;
wobei das Verfahren durch die Schritte **gekennzeichnet** ist:
Informieren (332) der Mehrzahl von entfernten Kommunikationseinheiten (112-116, 320-324) über eine Veränderung in einem Verschlüsselungsschlüssel oder in einer Verschlüsselungsart, innerhalb der Nachricht, wobei die Kommunikationseinheiten auf dem Verkehrskanal (302) informiert werden;
wobei der Schritt des Informierens den Schritt umfasst:
Zuweisen einer neuen Verwendungskennzeichnung zu dem gleichen Verkehrskanal für den Ruf; und
Verlassen des Verkehrskanals durch die Kommunikationseinheit und Zurückkehren zu einem Hauptsteuerungskanal, wenn die Kommunikationseinheit die Information verpasst hat und bestimmt, dass die neue Verwendungskennzeichnung nicht derjenigen entspricht, welche die Kommunikationseinheit dem Verkehrskanal zugewiesen hat.

2. Verfahren zum dynamischen Verändern eines Verschlüsselungsschlüssels gemäß Anspruch 1, wobei das Verfahren weiterhin **dadurch gekennzeichnet ist, dass** der Schritt des Informierens über eine Veränderung in dem Verschlüsselungsschlüssel während eines Rufs durchgeführt wird.

3. Verfahren zum dynamischen Verändern eines Verschlüsselungsschlüssels gemäß einem der vorhergehenden Ansprüche, wobei das Verfahren **dadurch gekennzeichnet ist, dass** der Verschlüsselungsschlüssel ein gemeinsamer, innerhalb der Mehrzahl von entfernten Kommunikationseinheiten verwendeter Schlüssel oder ein individueller Schlüssel ist, der individuellen entfernten Kommunikationseinheiten zugewiesen ist.

4. Verfahren zum dynamischen Verändern eines Verschlüsselungsschlüssels gemäß einem der vorhergehenden Ansprüche, wobei das Verfahren weiterhin durch den Schritt **gekennzeichnet** ist:
Übertragen der Nachricht in jedem Circuit-Mode-Sprach- oder -Datenframe innerhalb des Kommunikationssystems.

5. Verfahren zum dynamischen Verändern eines Verschlüsselungsschlüssels gemäß einem der vorhergehenden Ansprüche, wobei das Verfahren weiterhin durch die Schritte **gekennzeichnet** ist:
Verarbeiten der Nachricht durch eine entfernte Kommunikationseinheit, um eine Veränderung des Verschlüsselungsschlüssels oder der Verschlüsselungsart festzustellen; und
Zuweisen der neuen Verwendungskennzeichnung zu dem Verkehrskanal durch die entfernte Kommunikationseinheit, wenn eine Veränderung des Verschlüsselungsschlüssels oder der Verschlüsselungsart festgestellt wird.

6. Kommunikationssystem (100), das zur Unterstützung eines beliebigen der vorstehend genannten Schritte ausgelegt ist, um einen Verschlüsselungsschlüssel dynamisch zu verändern.

7. Kommunikationseinheit (112), die ausgelegt ist zum Handhaben eines dynamisch veränderten Verschlüsselungsschlüssels gemäß einem der Verfahrensansprüchen 1 bis 5.

8. Speichermedium (208), das zum Speichern von prozessorimplementierbaren Anweisungen zum Steuern eines Prozessors betreibbar ist, um das Verfahren nach einem der Ansprüche 1 bis 5 auszuführen.

## Revendications

1. Procédé de modification dynamique d'une clé de cryptage dans un système de communication sans fil (100) utilisant un protocole de cryptage, le système de communication (100) comprenant une unité de communication de service (122-132) communiquant avec une pluralité d'unités de communication à distance (112-116), le procédé comprenant les étapes consistant à :
communiquer un message, à partir de l'unité de communication de service, à la pluralité d'unités de communication à distance (112-116, 320-324), le message incluant une indication d'un canal de trafic avec un marqueur d'utilisation affecté pour la pluralité d'unités de communication à distance à utiliser;
le procédé étant **caractérisé par** l'étape consistant à :
notifier (332) à la pluralité d'unités de communication à distance (112-116, 320-324) une modification d'une clé de cryptage ou d'un mode de cryptage, dans ledit message, lesdites unités de communication étant notifiées dans ledit canal de trafic (302);
ladite étape de notification inclut l'étape consistant à :
affecter une nouvelle marque d'utilisation au même canal de trafic pour l'appel; et
abandonner, par l'unité de communication, le canal de trafic et revenir à un canal de commande principal si ladite unité de communication a manqué ladite notification et établit que la nouvelle marque d'utilisation ne correspond pas à celle que l'unité de communication a affectée au canal de trafic.

2. Procédé de modification dynamique d'une clé de cryptage selon la revendication 1, le procédé étant en outre **caractérisé en ce que** l'étape de notification d'une modification de la clé de cryptage est effectuée pendant un appel.

3. Procédé de modification dynamique d'une clé de cryptage selon l'une quelconque des revendications précédentes, le procédé étant **caractérisé en outre en ce que** la clé de cryptage est une clé à utilisation partagée, utilisée entre la pluralité d'unités de communication à distance ou une clé individuelle affectée à des unités individuelles de communication à distance.

4. Procédé de modification dynamique d'une clé de cryptage selon l'une quelconque des revendications précédentes, le procédé étant **caractérisé en outre par** l'étape consistant à:
transmettre le message dans chaque trame vocale ou de données de mode de circuit dans le système de communication.

5. Procédé de modification dynamique d'une clé de cryptage selon l'une quelconque des revendications précédentes, le procédé étant **caractérisé en outre par** les étapes consistant à:
traiter le message, au moyen d'une unité de communication à distance pour déterminer une modification de la clé de cryptage ou du mode de cryptage; et
affecter la nouvelle marque d'utilisation audit canal de trafic, au moyen de l'unité de communication à distance lorsqu'une modification de la clé de cryptage ou du mode de cryptage est déterminée.

6. Système de communication (100) adapté pour faciliter l'une quelconque des étapes mentionnées précédemment de modification dynamique d'une clé de cryptage.

7. Unité de communication (112) adaptée pour traiter une clé de cryptage modifiée de façon dynamique, selon l'une quelconque des revendications de procédé 1 à 5.

8. Support de mémoire (208) pouvant agir de manière à mémoriser des instructions pouvant être mises en oeuvre avec un processeur pour la commande d'un processeur pour exécuter le procédé selon l'une quelconque des revendications 1 à 5.
